# EUROPEAN PATENT APPLICATION

(11) **EP 3 263 539 A1**
(43) Date of publication of application: **03.01.2018**
(21) Application number: 15883401.0
(22) Date of filing: 24.12.2015
(51) Int. Cl.: C04B 41/80, C25B 9/00, C25B 13/04, H01M 8/12, H01M 8/02

(54) **METHOD FOR MANUFACTURING CERAMIC, CAPACITOR, SOLID OXIDE FUEL CELL, WATER ELECTROLYSIS DEVICE, AND HYDROGEN PUMP**

(30) Priority: 27.02.2015 JP 2015037726
(71) Applicant: Sumitomo Electric Industries, Ltd., Osaka-shi, Osaka 541-0041 (JP); Kyoto University, Kyoto-shi, Kyoto 606-8501 (JP)
(72) Inventor: MAJIMA, Masatoshi, Itami-shi Hyogo 664-0016 (JP); TAWARAYAMA, Hiromasa, Itami-shi Hyogo 664-0016 (JP); HIRAIWA, Chihiro, Itami-shi Hyogo 664-0016 (JP); HIGASHINO, Takahiro, Itami-shi Hyogo 664-0016 (JP); NODA, Yohei, Itami-shi Hyogo 664-0016 (JP); MIZUHARA, Naho, Itami-shi Hyogo 664-0016 (JP); UDA, Tetsuya, Kyoto-shi Kyoto 606-8501 (JP); HAN, Donglin, Kyoto-shi Kyoto 606-8501 (JP)
(74) Representative: Boult Wade Tennant
(86) International application number: PCT/JP2015/085931
(87) International publication number: WO 2016/136111

(57) **Abstract**

A method for manufacturing a ceramic material includes a step of performing heat treatment in a reducing atmosphere on a ceramic material in which a metallic oxide is diffused in crystal grains, thereby to reduce the metallic oxide to deposit a metallic element at grain boundaries of the ceramic material.

## Description

### TECHNICAL FIELD

The present invention relates to a method for manufacturing a ceramic material, and a capacitor, a solid oxide fuel cell, a water electrolysis device, and a hydrogen pump in each of which a ceramic material obtained thereby is used.

### BACKGROUND ART

Development of a solid oxide fuel cell (SOFC, hereinafter also referred to as "SOFC") have been actively conducted, since it is advantageous in that, for example, the power generation efficiency is high, expensive catalysts such as platinum are not required, and exhaust heat can be used.

A fuel cell includes, in a basic portion, a membrane electrode assembly or membrane electrode complex (MEA) that includes a fuel electrode (anode), a solid oxide electrolyte, and an air electrode (cathode). Further, the fuel cell includes: a fuel electrode collector that is in contact with the fuel electrode of the MEA; and a fuel electrode channel through which a fuel gas such as hydrogen is supplied to the fuel electrode, and also includes, at the air electrode side paired with the fuel electrode side, an air electrode collector that is in contact with the air electrode, and an air channel through which air is supplied to the air electrode. Generally, the fuel electrode collector and the air electrode collector are conductive porous bodies, and a fuel gas or hydrogen and an oxidizing gas or air are caused to flow through the porous bodies. That is, each electrode collector serves as a gas channel while functioning as a collector.

To operate the fuel cell, hydrogen, oxygen, and oxide ions have to be conducted in a solid electrolyte. To achieve ion conductivity at a practical level, it is necessary to heat either one of or both the MEA or the fuel gas. The ion conductivity is originated from a solid electrolyte material, and yttria-stabilized zirconia (YSZ) is mainly used for solid oxide fuel cells that are commercially available at present. The temperature at which this material exhibits ion conductivity at a practical level is 800°C to 1000°C which is high temperature, and thus it is necessary to use an expensive, highly heat-resistant material (e.g., Inconel, etc.) as a structural material for an interconnector or the like, resulting in high cost. In addition, the structural material easily forms an oxide film, and thus there is a problem in that an electric resistance layer is formed and the life of the fuel cell itself is shortened.

An intermediate temperature operating SOFC of which the operating temperature is decreased to 600°C or lower in order to solve the above-described problem, is expected. However, when the operating temperature is low, there is a problem in that the ion conductivity decreases, so that desired power generation performance cannot be ensured. Thus, a solid electrolyte with which the ion conductivity is high even at a low operating temperature and desired power generation performance can be ensured, is required.

In addition, as a solid electrolyte, a solid electrolyte having an oxygen ion conducting property or proton conducting property is adopted. In the case where a solid electrolyte having an oxygen ion conducting property is adopted, there is a problem in that oxygen ions are bonded to hydrogen at a fuel electrode to produce water, and this water dilutes fuel to decrease the fuel utilization rate.

Meanwhile, a solid electrolyte having a proton conducting property such as yttrium-doped barium zirconate (hereinafter, also referred to as "BZY") can achieve high proton conductivity also in an intermediate temperature range of 600°C or lower, and thus is expected as a solid electrolyte material that replaces the above solid electrolyte having an oxygen ion conducting property. In addition, in the case where a proton conductive solid electrolyte is adopted, a problem in that fuel is diluted as described above as in the oxygen ion conductive solid electrolyte, does not arise.

However, BZY has poor sinterability as a polycrystalline material, and also has a problem in that the ratio of grain boundaries becomes high due to small crystal grains, which inhibits proton conduction, resulting in a decrease in the electric conductivity.

For example, when the doped amount of yttrium is equal to or less than 10 mol%, crystal grains are less likely to grow during sintering. Thus, the crystal face density increases to increase the resistance. When this material is used for a fuel cell, the power generation performance is diminished. In addition, when the doped amount of yttrium is equal to or greater than 15 mol%, it is difficult to uniformly disperse and dissolve yttrium. Thus, there is a problem in that, in the temperature range of 200 to 400°C, a phenomenon occurs in which the lattice constant peculiarly changes, so that cracking occurs in BZY, which is a solid electrolyte, and an electrode is detached.

For the above-described problems, the present inventors have succeeded in developing BZY with which a rate of change in lattice constant with respect to temperature change is constant even when the doped amount of yttrium is increased to be 15 to 20 mol%, by adding third heat treatment, and accordingly have succeeded in inhibiting an electrode from being detached (see Japanese Laid-Open Patent Publication No. 2013-206702: PATENT LITERATURE 1).

### CITATION LIST

### [PATENT LITERATURE]

PATENT LITERATURE 1: Japanese Laid-Open Patent Publication No. 2013-206702

### SUMMARY OF INVENTION

### [TECHNICAL PROBLEM]

However, it has been found that when the above BZY is used as a solid electrolyte for an anode supported type SOFC, the solid electrolyte has decreased ion conductivity as compared to that of an electrolyte (BZY) supported type SOFC, and thus there is room for improvement in this respect.

In a process for manufacturing a SOFC, the atmosphere and the temperature are generally controlled in sintering a ceramic material. It is thought that at this time, a metallic element such as nickel is diffused from the electrode material of the anode or the like into the ceramic material, and due to this, the ion conductivity is decreased. In addition, in the case of another ceramic material, it is thought that impurities are diffused into crystal grains or grain boundaries, and due to this, electric characteristics, piezoelectric characteristics, heat conductivity, mechanical/thermal strength, and durability associated therewith are deteriorated.

Generally, regarding a ceramic material, an excess component and the like are deposited on the surface portion of a sintered compact due to a sintering aid or the sintering atmosphere. However, a method for cleaning out a metallic element dissolved as impurities in a ceramic material has not been reported so far.

In addition, regarding a solid electrolyte to be used for an SOFC or the like, the solid electrolyte is used such that an anode material and a cathode material are placed on the surface of the solid electrolyte. Use of palladium or platinum, which is not diffused into the solid electrolyte, as these materials has been known. However, in this case, palladium or platinum, which is expensive, is used as an anode electrode substrate, and a gas phase method (e.g., PLD (Pulse Laser Deposition) method) is used, so that there is a problem in that the manufacturing cost of the SOFC increases, which is a great obstacle to putting the SOFC to practical use.

As described above, in a ceramic material for which functionality is required, due to mixing of impurities thereinto, desired performance including ion conductivity, piezoelectric performance, mechanical strength, and durability is not achieved in some cases. Therefore, if impurities can be cleaned out in a final usage configuration of a ceramic material, an exhibition of an advantageous effect can be expected in which various performance characteristics of the ceramic material improve, resulting in, for example, improvement of the output and the durability of a fuel cell.

Therefore, in view of the above-described problems, an object of the present invention is to provide: a method for manufacturing a ceramic material capable of having desired performance characteristics, by cleaning a ceramic material containing an impurity metal; and a ceramic material using the same.

### [SOLUTION TO PROBLEM]

A method for manufacturing a ceramic material according to an aspect of the present invention is
(1) a method for manufacturing a ceramic material, the method including a step of performing heat treatment in a reducing atmosphere on a ceramic material in which a metallic oxide is diffused in crystal grains, thereby to reduce the metallic oxide to deposit a metallic element at grain boundaries of the ceramic material.

### [ADVANTAGEOUS EFFECTS OF INVENTION]

According to the above invention, a method for manufacturing a ceramic material capable of having desired performance characteristics, by cleaning a ceramic material containing an impurity metal, can be provided.

### BRIEF DESCRIPTION OF DRAWINGS

[FIG. 1] FIG. 1 is a diagram schematically representing the states of a ceramic material in respective steps of a method for manufacturing a ceramic material according to an embodiment of the present invention.
[FIG. 2] FIG. 2 is a graph representing the results of measurement of the intra-grain conductivity of a ceramic material 2 produced in Example 1.
[FIG. 3] FIG. 3 is a graph representing the results of measurement of the grain boundary conductivity of the ceramic material 2 produced in Example 1.
[FIG. 4] FIG. 4 is a graph representing the results of evaluation of the oxidized state of nickel in ceramic materials produced in Example 1.
[FIG. 5] FIG. 5 is a diagram representing STEM-EDS spectra of a ceramic material 1 prepared in Example 1.
[FIG. 6] FIG. 6 is a diagram representing a STEM-EDS spectrum of the ceramic material 2 produced in Example 1.
[FIG. 7] FIG. 7 is a photograph representing the results of observation of the ceramic material 2 produced in Example 1 with a STEM.
[FIG. 8] FIG. 8 is a diagram representing a STEM-EDS spectrum of a ceramic material 3 produced in Example 1.
[FIG. 9] FIG. 9 is a photograph representing the results of observation of the ceramic material 3 produced in Example 1 with the STEM.
[FIG. 10] FIG. 10 is a photograph representing the results of observation of the ceramic material 3 produced in Example 1 with the STEM at a higher magnification.
[FIG. 11] FIG. 11 is a graph representing the results of measurement of the total conductivities of the ceramic materials 1, 2, and 4 produced in Example 1.
[FIG. 12] FIG. 12 is a graph representing the results of measurement of the total conductivities, at 600°C, of the ceramic materials 1, 2, and 4 produced in Example 1.

### DESCRIPTION OF EMBODIMENTS

### [Description of Embodiment of Present Invention]

First, embodiments of the present invention will be listed and described below.
(1) A method for manufacturing a ceramic material according to an embodiment of the present invention is a method for manufacturing a ceramic material, the method including a step of performing heat treatment in a reducing atmosphere on a ceramic material in which a metallic oxide is diffused in crystal grains, thereby to reduce the metallic oxide to deposit a metallic element at grain boundaries of the ceramic material.
   According to the embodiment of the invention described in the above (1), a method for manufacturing a ceramic material capable of having desired various performance characteristics, by cleaning a ceramic material containing an impurity metal, can be provided.
(2) The method for manufacturing a ceramic material according to the above (1) preferably further includes: a step of oxidizing the metallic element deposited at the grain boundaries; and a step of performing heat treatment in an inert atmosphere on the ceramic material having the metallic oxide at the grain boundaries.
   According to the embodiment of the invention described in the above (2), a method for manufacturing a ceramic material capable of performing a desired function, without deteriorating various characteristics, even in an atmosphere in which the metallic element deposited at the grain boundaries is oxidized again, can be provided.
(3) In the method for manufacturing a ceramic material according to the above (1) or (2), the ceramic material is preferably yttrium-doped barium zirconate (BZY), ytterbium-doped barium zirconate (BZYb), yttrium-doped strontium zirconate (SZY), yttrium-doped barium cerate (BCY), or barium titanate (BT).
   According to the embodiment of the invention described in the above (3), a method for manufacturing a ceramic material having various excellent characteristics including ion conductivity, can be provided.
(4) In the method for manufacturing a ceramic material according to any one of the above (1) to (3), the metallic oxide is preferably an oxide of nickel (Ni), iron (Fe), copper (Cu), titanium (Ti), or cobalt (Co).
   According to the embodiment of the invention described in the above (4), a method for manufacturing a ceramic material having various excellent characteristics by eliminating the metallic oxide from the crystal grains of the ceramic material, can be provided.
(5) In the method for manufacturing a ceramic material according to any one of the above (1) to (4), the step of depositing the metallic element at the grain boundaries of the ceramic material is preferably carried out in an atmosphere containing a getter material having oxidation activity equal to or higher than that of the metallic element.
   According to the embodiment of the invention described in the above (5), a method for manufacturing the ceramic material having various excellent characteristics under lower-cost conditions, can be provided.
(6) A capacitor according to an embodiment of the present invention is a capacitor in which a ceramic material obtained by the method for manufacturing a ceramic material according to any one of the above (1) to (5) is used.
   According to the embodiment of the invention described in the above (6), a capacitor of which the permittivity and the like less deteriorate can be provided as a capacitor obtained by stacking and co-sintering a ceramic dielectric and electrodes.
(7) A solid oxide fuel cell according to an embodiment of the present invention is a solid oxide fuel cell in which a ceramic material obtained by the method for manufacturing a ceramic material according to any one of the above (2) to (5) is used.
   According to the embodiment of the invention described in the above (7), a solid oxide fuel cell having excellent output and having further improved durability by improvement of the ion conductivity of a solid electrolyte, can be provided.
(8) A water electrolysis device according to an embodiment of the present invention is a water electrolysis device in which a ceramic material obtained by the method for manufacturing a ceramic material according to any one of the above (2) to (5) is used.
   According to the embodiment of the invention described in the above (8), a water electrolysis device having high gas-purifying efficiency by improvement of the ion conductivity of a solid electrolyte, can be provided.
(9) A hydrogen pump according to an embodiment of the present invention is a hydrogen pump in which a ceramic material obtained by the method for manufacturing a ceramic material according to any one of the above (2) to (5) is used.
   According to the embodiment of the invention described in the above (9), a hydrogen pump in which the ion conductivity of a solid electrolyte is improved and thus movement of hydrogen ions is fast, can be provided.

### [Details of Embodiments of Present Invention]

Hereinafter, specific examples of the method for manufacturing a ceramic material and the like according to the embodiments of the present invention will be described below in more detail. The present invention is not limited to these examples and is indicated by the claims, and is intended to include meaning equivalent to the claims and all modifications within the scope of the claims.

### <Method for Manufacturing Ceramic Material>

### -Step of Depositing Metallic Element at Grain Boundaries of Ceramic Material-

The method for manufacturing a ceramic material according to the embodiment of the present invention includes a step of performing heat treatment in a reducing atmosphere on a ceramic material in which a metallic oxide is diffused in crystal grains, thereby to reduce the metallic oxide to deposit a metallic element at grain boundaries of the ceramic material.

If the metallic oxide is diffused in the crystal grains of the ceramic material, various characteristics of the ceramic material deteriorate. By performing heat treatment in a reducing atmosphere on the ceramic material in a state where the metallic oxide is diffused in the crystal grains, to reduce the metallic oxide into metallic particles, the metallic element can be deposited at the grain boundaries.

### (Ceramic Material)

Examples of the ceramic material that has not undergone the heat treatment include a ceramic material having a perovskite structure. Such a ceramic material has functions such as an ion conducting property and a piezoelectric property, and various characteristics thereof can be improved by cleaning out impurities diffused in crystal grains thereof. Specific examples of such a ceramic material include yttrium-doped barium zirconate (BZY), ytterbium-doped barium zirconate (BZYb), yttrium-doped strontium zirconate (SZY), yttrium-doped barium cerate (BCY), and barium titanate (BT).

### (Metallic Oxide)

The metallic oxide may be any metallic oxide as long as it can be diffused in the crystal grains of the ceramic material, and examples thereof include oxides of nickel (Ni), iron (Fe), copper (Cu), and cobalt (Co).

### (Reducing Atmosphere)

The reducing atmosphere is not particularly limited as long as it is an atmosphere in which the metallic oxide diffused in the crystal grains of the ceramic material can be reduced when heat treatment is performed at a high temperature on the ceramic material. For example, a hydrogen atmosphere, an inert atmosphere, a vacuum atmosphere, and the like may be selected.

In addition, a gas in the atmosphere itself does not need to be reductive. For example, even when the gas in the atmosphere is an inert gas such as argon, the metallic oxide can be reduced by performing heat treatment in an atmosphere containing a getter material having oxidation activity equal to or higher than that of the metallic element. Such a getter material may be selected in accordance with the type of the metallic oxide contained in the ceramic material, and examples thereof include titanium, nickel, iron, and carbon.

### (Heat Treatment Temperature)

The temperature of the heat treatment may be any temperature as long as it is a temperature at which the metallic oxide diffused in the crystal grains of the ceramic material can be reduced in the reducing atmosphere. For example, in the case where a ceramic material in which nickel oxide is diffused in crystal grains of BZY is used and the atmosphere is an argon atmosphere containing titanium as a getter material, the heat treatment may be performed at approximately 1400°C.

### (Heat Treatment Time)

In addition, the heat treatment time may be any time as long as it is a time sufficient to reduce the metallic oxide, and the heat treatment time may be selected as appropriate in accordance with the conditions of the ceramic material, the metallic oxide, the reducing atmosphere, and the heat treatment temperature. For example, in the case of performing heat treatment at approximately 1400°C in an atmosphere containing argon gas and titanium on a ceramic material in which nickel oxide is diffused in crystal grains of BZY, the heat treatment time may be approximately 100 hours.

By performing the above, the metallic oxide diffused in the crystal grains of the ceramic material can be reduced to deposit the metallic element at the grain boundaries, so that various characteristics of the ceramic material can be improved. That is, even a ceramic material of which various characteristics such as an ion conducting property are deteriorated due to mixing of impurities into crystal grains, can be suitably used for a capacitor and the like, by cleaning out the impurities as described above to improve the various characteristics.

However, when an attempt was made to use a ceramic material, in which Ni is deposited at grain boundaries of BZY, as a solid electrolyte of an SOFC that is operated at approximately 600°C, a phenomenon was found in which the ion conductivity of the ceramic material decreased again. Thus, the present inventors conducted research and found that the phenomenon occurs due to the following. First, by the ceramic material being exposed to a high temperature in an atmosphere in which oxygen gas is supplied, nickel at the grain boundaries is oxidized. At this time, volume expansion occurs when nickel is oxidized, so that gaps occur at the grain boundaries. Thus, it was found that even when the metallic oxide is eliminated from the crystal grains to improve the ion conductivity within the crystal grains, the ion conductivity at the grain boundaries deteriorates due to occurrence of the gaps at the grain boundaries.

As a result of conducting further research in order to solve this new problem, it was found that it is effective to perform heat treatment again in an inert atmosphere on the ceramic material in which the gaps have occurred at the grain boundaries due to generation of a metallic oxide. It was found that, accordingly, the gaps at the grain boundaries of the ceramic material can be closed with the metallic oxide kept present at the grain boundaries, so that the ion conductivity at the grain boundaries can be improved again. In addition, it was found that the total ion conductivity of the ceramic material is also improved by one or more digits as compared to that of a conventional ceramic material in a state where a metallic oxide is diffused in crystal grains.

Because of the above, the method for manufacturing a ceramic material according to the embodiment of the present invention further includes, in addition to the step of depositing the metallic element at the grain boundaries, a step of oxidizing the metallic element deposited at the grain boundaries and a step of performing heat treatment in an inert atmosphere on the ceramic material having the metallic oxide at the grain boundaries.

### -Step of Oxidizing Metallic Element Deposited at Grain Boundaries-

This step is a step of oxidizing again the metallic element deposited at the grain boundaries. Specifically, heat treatment may be performed in an oxidizing atmosphere such as oxygen gas on the ceramic material having the metallic element at the grain boundaries, such that the metallic element is oxidized.

### (Heat Treatment Temperature)

The heat treatment temperature is preferably higher, since oxidation of the metallic element more easily proceeds as the heat treatment temperature is higher. On the other hand, it is necessary to set the heat treatment temperature to a temperature at which a metallic oxide generated by this step is not diffused in the crystal grains again. Thus, the heat treatment temperature may be selected as appropriate in accordance with the types of the ceramic material and the metallic element. For example, in the case of a ceramic material having nickel at grain boundaries of BZY, the heat treatment may be performed in the range of 400°C to 1000°C.

### (Heat Treatment Time)

The heat treatment time may be any time as long as it is a time sufficient to oxidize the metallic element. For example, in the case of performing heat treatment at approximately 600°C in an oxygen gas atmosphere on a ceramic material having nickel at grain boundaries of BZY, the heat treatment time may be approximately 2 to 80 hours.

In the case of a combination of BZY and nickel, it was found that nickel is diffused in crystal grains of a ceramic material when nickel is trivalent, and is not diffused and remains at grain boundaries when nickel is bivalent. Thus, oxygen potential is preferably controlled such that bivalent nickel oxide is prevented from turning to trivalent nickel oxide. By performing re-sintering in an inert atmosphere in addition to controlling the heat treatment temperature to a temperature at which the metallic oxide is not diffused in the crystal grains of the ceramic material as described above, the metallic oxide can be prevented from being diffused in the crystal grains, with high accuracy.

### -Step of Performing Heat Treatment on Ceramic Material Having Metallic Oxide at Grain Boundaries-

This step is a step for closing gaps occurring at the grain boundaries due to the metallic oxide generated at the grain boundaries. Specifically, heat treatment may be performed in an inert atmosphere on the ceramic material having the metallic oxide at the grain boundaries.

### (Atmosphere)

This step is carried out in an inert atmosphere such that the metallic oxide at the grain boundaries is not further oxidized or reduced. For example, heat treatment may be performed in an atmosphere such as Ar gas, N₂ gas, or the like.

### (Heat Treatment Temperature)

The heat treatment temperature in this step only needs to be a temperature sufficient to close the gaps, occurring at the grain boundaries, by the ceramic material being resintered, and may be selected as appropriate in accordance with the types of the ceramic material and the metallic oxide. For example, in the case of having nickel oxide at grain boundaries of BZY, the heat treatment temperature may be approximately 1200°C to 1600°C.

### (Heat Treatment Time)

The heat treatment time in this step may be any time as long as it is a time sufficient to close the gap occurring at the grain boundary, and may be selected as appropriate in accordance with the types of the ceramic material and the metallic oxide and the heat treatment temperature. For example, in the case of performing heat treatment at approximately 1400°C on a ceramic material having nickel oxide at grain boundaries of BZY, the heat treatment time may be approximately 2 to 30 hours.

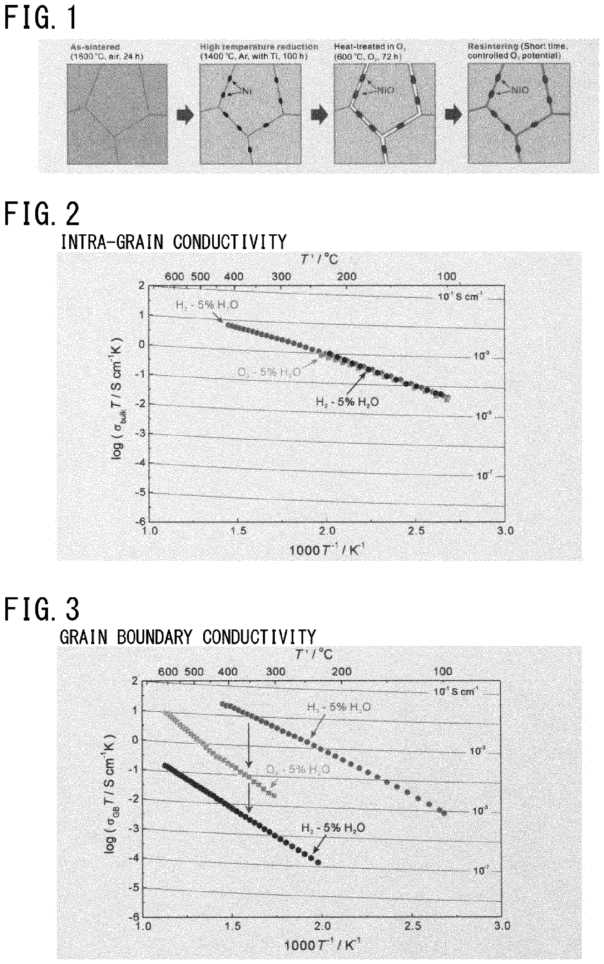

FIG. 1 shows schematic diagrams representing the states of the ceramic material in the respective steps described above. The respective steps of the method for manufacturing a ceramic material according to the embodiment of the present invention will be described in detail with reference to FIG. 1.

First, heat treatment is performed in a reducing atmosphere on the ceramic material in which the metallic oxide is diffused in the crystal grains (the leftmost diagram in FIG. 1). Accordingly, the metallic oxide in the crystal grains is reduced to be deposited at the grain boundaries (the second diagram from left in FIG. 1).

Heat treatment is performed in an oxidizing atmosphere on the ceramic material having the metallic element at the grain boundaries. Accordingly, the metallic element at the grain boundaries is oxidized again into a metallic oxide. At this time, with volume expansion occurring when the metal is oxidized, gaps occur at the grain boundaries (the third diagram from left in FIG. 1).

Heat treatment is performed in an inert atmosphere on the ceramic material having the metallic oxide at the grain boundaries. By re-sintering the ceramic material as described above, the gaps at the grain boundaries can be closed with the metallic oxide kept present at the grain boundaries (the rightmost diagram in FIG. 1).

The ceramic material obtained through the three steps described above can be preferably used even in an application in which a ceramic material is exposed to an oxidizing or reducing atmosphere at a high temperature of approximately 600°C as with a solid electrolyte of an SOFC, without deterioration in various characteristics. Even when the metallic oxide at the grain boundaries is reduced in a reducing atmosphere, the influence of gaps between the metallic element and a crystal interface that occur in this case is minute, and the gaps have no effect on various performance characteristics of the ceramic material.

### <Capacitor>

A ceramic multilayer capacitor is produced by stacking and co-sintering a ceramic dielectric and electrodes (metallic oxide). If metallic impurities are diffused and dissolved in the dielectric portion at this time, there is a possibility that the metallic impurities deteriorate the permittivity and the like. Thus, by using a ceramic material in which metallic impurities are deposited at grain boundaries of the ceramic material as in the above-described method for manufacturing a ceramic material according to the embodiment of the present invention, deterioration of the permittivity and the like can be inhibited.

### <Solid Oxide Fuel Cell>

The solid oxide fuel cell according to the embodiment of the present invention is a solid oxide fuel cell in which a ceramic material obtained by the above-described method for manufacturing a ceramic material according to the embodiment of the present invention is used. Specifically, a SOFC having the same structure as a conventional SOFC may be made by using the ceramic material as a solid electrolyte and providing a cathode electrode and an anode electrode at both sides of the ceramic material

### <Water Electrolysis Device>

Since the metallic impurities are deposited at the grain boundaries of the ceramic material obtained by the method for manufacturing a ceramic material according to the embodiment of the present invention as described above, the ceramic material has high ion conductivity. Thus, in a water electrolysis device that applies a voltage to water to electrolyze the water into hydrogen and oxygen, the generation efficiency of hydrogen and oxygen can be increased by using, as a solid electrolyte, the ceramic material obtained by the method for manufacturing a ceramic material according to the embodiment of the present invention.

### <Hydrogen Pump>

With the same device configuration as the solid oxide fuel cell or water electrolysis device described above, a hydrogen pump can be made in which hydrogen ions are moved from one side to another side by applying a voltage to the ceramic material that is a solid electrolyte. Thus, a hydrogen pump in which the ceramic material obtained by the method for manufacturing a ceramic material according to the embodiment of the present invention is used as a solid electrolyte becomes a hydrogen pump in which movement of hydrogen ions is fast.

### EXAMPLES

The present invention will be described below in more detail by means of examples, but these examples are merely illustrative, and the ceramic material and the like of the present invention are not limited to these examples. The scope of the present invention is defined by the description of the claims and includes meaning equivalent to the description of the claims and all modifications within the scope of the claims.

### [Examples]

BZY was used as a ceramic material. The specific composition of the BZY was set as BaZr_{0.8} Y_{0.2}O_{3-δ} (hereinafter, referred to as BZY20).

Particles (average particle diameter: 50 nm) of the BZY20 and particles (average particle diameter: 1 µm) of NiO were mixed, and sintering was performed in the atmosphere at 1600°C for 24 hours. Accordingly, a ceramic material 1 was obtained in which nickel oxide was diffused in crystal grains. The mixing ratio of the BZY20 and NiO was set as BZY : NiO = 100 mol: 5 mol.

Subsequently, heat treatment was performed on the ceramic material 1 in an argon gas atmosphere containing titanium at 1400°C for 100 hours. Accordingly, the nickel oxide in the crystal grains was reduced, and a ceramic material 2 was obtained in which nickel was deposited at grain boundaries.

Then, heat treatment was performed on the ceramic material 2 in an oxygen gas atmosphere at 600°C for 72 hours. Accordingly, nickel at the grain boundaries was oxidized, and a ceramic material 3 having nickel oxide at the grain boundaries was obtained.

Furthermore, heat treatment was performed on the ceramic material 3 in an argon gas atmosphere at 1400°C for 24 hours. Accordingly, a ceramic material 4 was obtained in which the grain boundaries were closed to provide no gap, with nickel oxide kept present at the grain boundaries.

### (Evaluation)

First, the intra-grain conductivity and the grain boundary conductivity of the ceramic material 2 obtained above were measured. The results are shown in FIG. 2 and FIG. 3. In FIG. 2 and FIG. 3, the vertical axis represents a logarithm of conductivity x temperature (σT/Scm⁻¹K), and the horizontal axis represents the reciprocal (T⁻¹/K⁻¹) of the temperature. In addition, the measurement was performed while the measurement atmosphere was switched sequentially in order of a humidified hydrogen atmosphere (H₂-5% H₂O: round marks in FIGS. 2 and 3), a humidified oxygen atmosphere (O₂-5% H₂O: square marks in FIGS. 2 and 3), and a humidified hydrogen atmosphere (H₂-5% H₂O: hexagonal marks in FIGS. 2 and 3).

From the results of FIG. 2, it is recognized that high conductivity is exhibited in the crystal grains under any of the measurement conditions. Meanwhile, from the results of FIG. 3, it is recognized that the grain boundary conductivity is deteriorated by the ceramic material 2 being exposed to the oxygen atmosphere immediately after the manufacture.

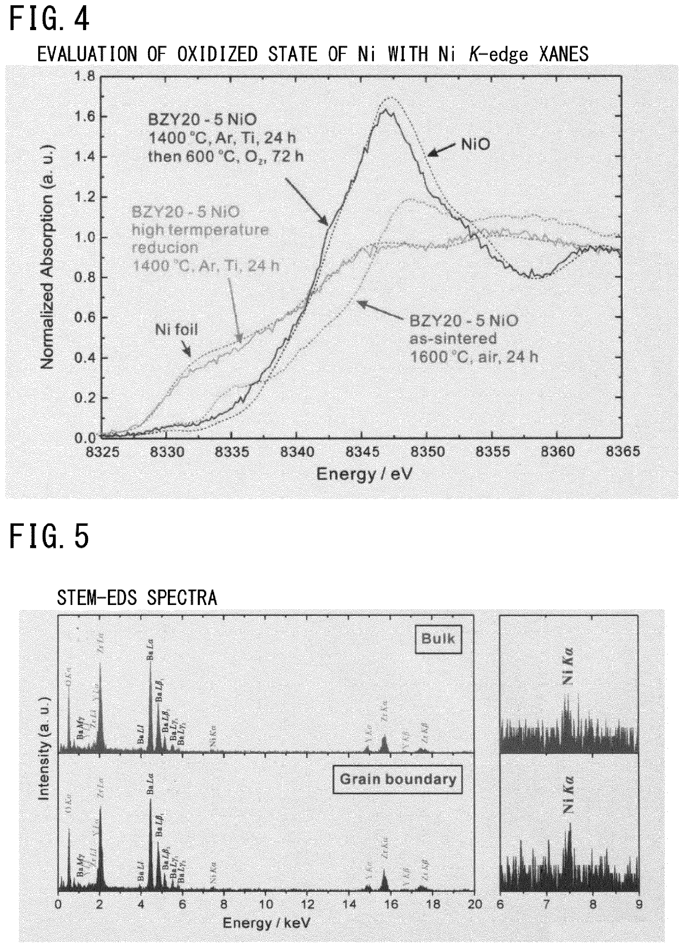

Subsequently, to evaluate the oxidized state of nickel, the ceramic materials 1 to 3 were measured with Ni K-edge XANES (X-ray Absorption Near Edge Structure). The results are shown in FIG. 4. From the results, it was recognized that the oxidized state of Ni in the ceramic material 1 is 2.95 and close to valence 3, the oxidized state of Ni in the ceramic material 2 is close to 0, and the oxidized state of Ni in the ceramic material 3 is close to valence 2. Accordingly, it was confirmed that nickel oxide was all reduced in the ceramic material 2.

In addition, for the ceramic materials 1 to 3, STEM (Scanning Transmission Electron Microscope)-EDS (Energy Dispersive X-ray Spectroscopy) spectra and STEM photographs were observed, and where Ni or NiO was present in crystal was confirmed.

FIG. 5 shows STEM-EDS spectra of the ceramic material 1. In FIG. 5, the vertical axis represents intensity (a.u.), and the horizontal axis represents energy (keV). In addition, the upper part represents the results of measurement within the crystal grains, and the lower part represents the results of measurement at the grain boundaries. Furthermore, enlarged spectra within the range of 6 to 9 keV are shown at the right side.

From FIG. 5, presence of nickel both within the crystal grains and at the grain boundaries was confirmed. More specifically, it was recognized that the Ni concentration within the crystal grains is 0.74 at%, and the Ni concentration at the grain boundaries is 1.30 at%. It is noted that at% means atomic%.

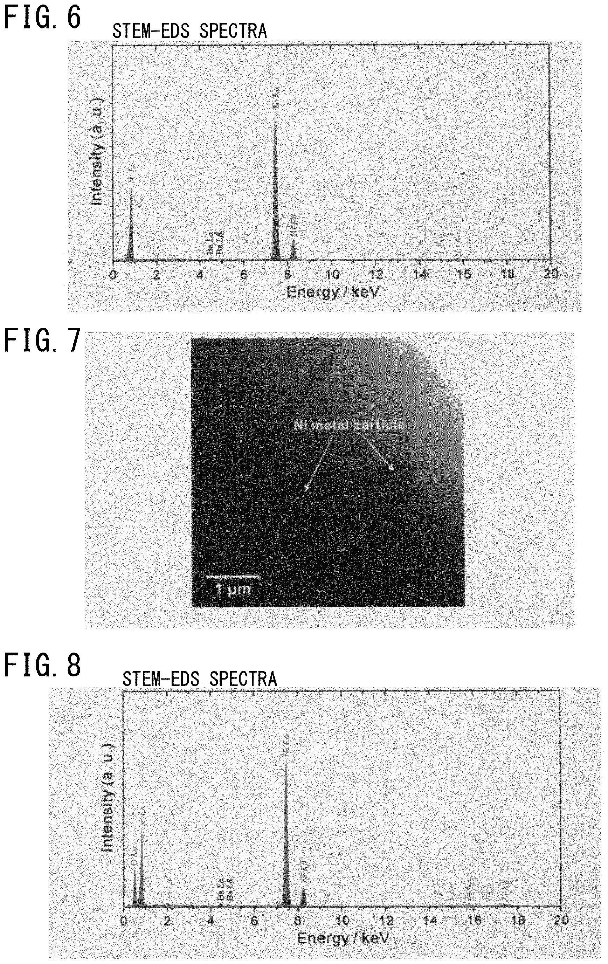

FIG. 6 shows a STEM-EDS spectrum of the ceramic material 2. Similarly to FIG. 5, in FIG. 6, the vertical axis represents intensity (a.u.), and the horizontal axis represents energy (keV). In addition, FIG. 7 represents a STEM photograph of the ceramic material 2.

From these results, it was confirmed that the metallic element (Ni) was deposited at the grain boundaries in the ceramic material 2. Metallic particles of Ni are very easily found at the grain boundaries, and thus are thought to be present at the grain boundaries in a large amount.

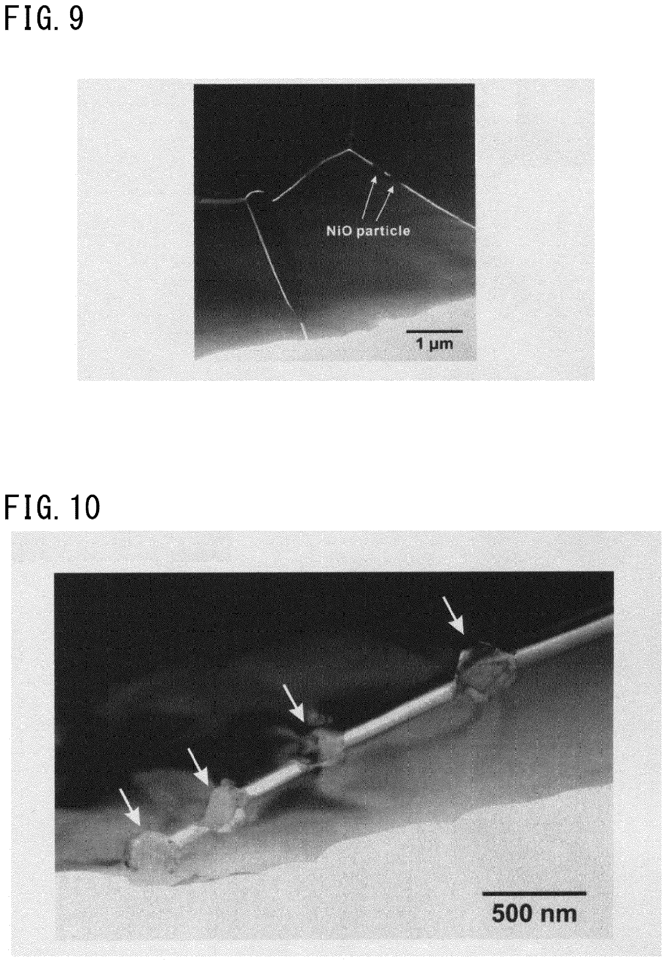

FIG. 8 shows a STEM-EDS spectrum of the ceramic material 3. Similarly to FIG. 5, in FIG. 8, the vertical axis represents intensity (a.u.), and the horizontal axis represents energy (keV). In addition, FIG. 9 represents a STEM photograph of the ceramic material 3. Furthermore, FIG. 10 represents a STEM photograph at a high magnification.

From these results, it was confirmed that in the ceramic material 3, the metallic particles (Ni particles) present at the grain boundaries of the ceramic material 2 were oxidized into a metallic oxide (NiO). In particular, from FIG. 9 and FIG. 10, it was recognized that gaps occurred between the crystal grains due to generation of NiO having a large particle diameter at the grain boundaries.

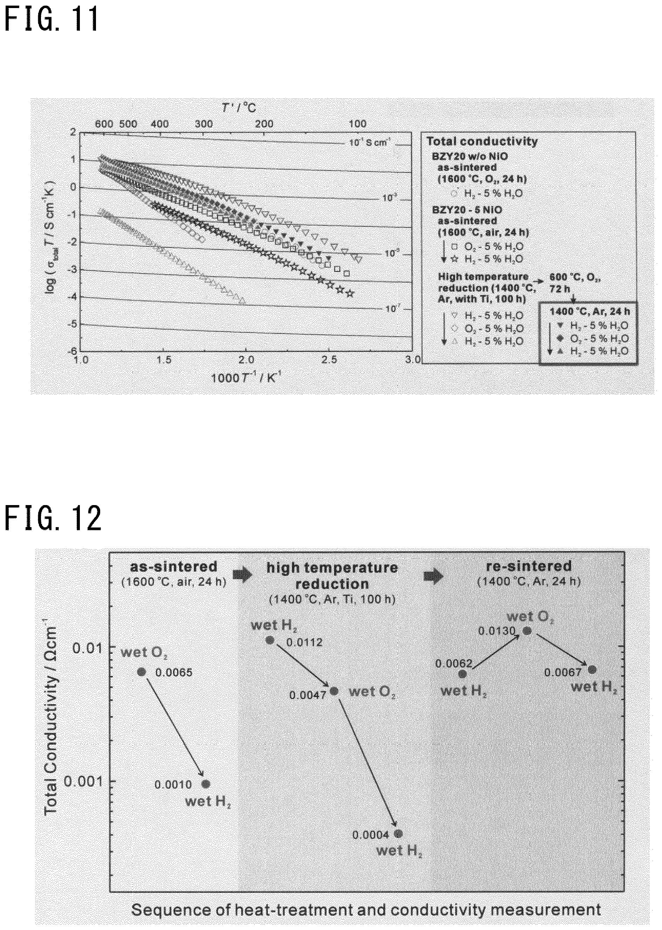

Next, FIG. 11 shows the results of measurement of the total conductivities of the ceramic materials 1, 2, and 4. In FIG. 11, the vertical axis represents a logarithm of conductivity x temperature (σT/Scm⁻¹K), and the horizontal axis represents the reciprocal (T⁻¹/K⁻¹) of the temperature. In addition, the results of measurement for the BZY20 are also shown.

In FIG. 11, the results of measurement of the BZY20 in a humidified hydrogen atmosphere (H₂-5% H₂O) are shown by hollow round marks, the results of measurement of the ceramic material 1 in a humidified oxygen atmosphere (O₂-5% H₂O) and then in a humidified hydrogen atmosphere (H₂-5% H₂O) are shown by hollow square marks and hollow star marks, respectively, the results of measurement of the ceramic material 2 in order of a humidified hydrogen atmosphere (H₂-5% H₂O), a humidified oxygen atmosphere (O₂-5% H₂O), and a humidified hydrogen atmosphere (H₂-5% H₂O) are shown by hollow downward triangle marks, hollow rhombus marks, and hollow upward triangle marks, respectively, and the results of measurement of the ceramic material 4 in order of a humidified hydrogen atmosphere (H₂-5% H₂O), a humidified oxygen atmosphere (O₂-5% H₂O), and a humidified hydrogen atmosphere (H₂-5% H₂O) are shown by downward triangle marks, rhombus marks, and upward triangle marks, respectively.

From FIG. 11, it is recognized that the total conductivity considerably improves in the ceramic material 4 (downward triangle marks) as compared to that in the case of measurement of the ceramic material 1 in the hydrogen atmosphere (hollow star marks) and the case of measurement of the ceramic material 2 in the hydrogen atmosphere for the second time (hollow upward triangle marks). In addition, reproducibility was able to be confirmed. When the total conductivity of the ceramic material 4 was measured at 600°C, the total conductivity was 0.0062 S/cm in the hydrogen atmosphere for the first time, 0.0130 S/cm in the subsequent oxygen atmosphere, and 0.0067 S/cm in the final hydrogen atmosphere.

Finally, FIG. 12 shows the results of measurement of the total conductivities of the ceramic materials 1, 2, and 4 at 600°C in each atmosphere. In FIG. 12, the vertical axis represents the conductivity (Ω·cm⁻¹), and the horizontal axis represents the results of measurement after each heat treatment (the ceramic materials 1, 2, and 4).

As shown in FIG. 12, it was recognized that, in the case where a ceramic material is used in an application in which the ceramic material is exposed alternately to an oxygen atmosphere and a hydrogen atmosphere as in a fuel cell, the total conductivity does not decrease in the ceramic material 4 as compared to that of the ceramic material 2.

With the case where the ceramic material is BZY and the metallic oxide is NiO as an example, the above indicates that a ceramic material containing an impurity metal can be cleaned, and further a ceramic material of which the ion conductivity does not deteriorate even in an atmosphere in which a metallic element deposited at the grain boundaries is oxidized again, can be manufactured.

On the basis of the same principle, also in the case where the ceramic material is ytterbium-doped barium zirconate (BZYb), yttrium-doped strontium zirconate (SZY), or yttrium-doped barium cerate (BCY) or in the case where the metallic oxide is iron oxide or copper oxide, it is possible to clean the ceramic material, and it is further possible to manufacture a ceramic material of which the ion conductivity does not deteriorate even in an atmosphere in which a metallic element deposited at the grain boundaries is oxidized again.

## Claims

1. A method for manufacturing a ceramic material, the method comprising a step of performing heat treatment in a reducing atmosphere on a ceramic material in which a metallic oxide is diffused in crystal grains, thereby to reduce the metallic oxide to deposit a metallic element at grain boundaries of the ceramic material.

2. The method for manufacturing a ceramic material according to claim 1, further comprising:
a step of oxidizing the metallic element deposited at the grain boundaries; and
a step of performing heat treatment in an inert atmosphere on the ceramic material having the metallic oxide at the grain boundaries.

3. The method for manufacturing a ceramic material according to claim 1 or 2, wherein the ceramic material is yttrium-doped barium zirconate (BZY), ytterbium-doped barium zirconate (BZYb), yttrium-doped strontium zirconate (SZY), yttrium-doped barium cerate (BCY), or barium titanate (BT).

4. The method for manufacturing a ceramic material according to any one of claims 1 to 3, wherein the metallic oxide is an oxide of nickel (Ni), iron (Fe), copper (Cu), titanium (Ti), or cobalt (Co).

5. The method for manufacturing a ceramic material according to any one of claims 1 to 4, wherein the step of depositing the metallic element at the grain boundaries of the ceramic material is carried out in an atmosphere containing a getter material having oxidation activity equal to or higher than that of the metallic element.

6. A capacitor in which a ceramic material obtained by the method for manufacturing a ceramic material according to claim 1 is used.

7. A solid oxide fuel cell in which a ceramic material obtained by the method for manufacturing a ceramic material according to claim 2 is used.

8. A water electrolysis device in which a ceramic material obtained by the method for manufacturing a ceramic material according to claim 2 is used.

9. A hydrogen pump in which a ceramic material obtained by the method for manufacturing a ceramic material according to claim 2 is used.
